# EUROPEAN PATENT APPLICATION

(11) **EP 3 951 674 A1**
(43) Date of publication of application: **09.02.2022**
(21) Application number: 20189764.2
(22) Date of filing: 06.08.2020
(51) Int. Cl.: G06Q 10/06, G06F 9/50

(54) **METHOD AND SYSTEM FOR MANAGING EXECUTION OF AN INDUSTRIAL TASK IN A SHARED CONTROL ENVIRONMENT**

(71) Applicant: Siemens Aktiengesellschaft, 80333 München (DE)
(72) Inventor: BOBADE, Rupesh, 444604 Amravati, Maharashtra (IN); DOIPHODE, Manish, 5601000 Bangalore (IN); MATTUMMAL VALAPPIL, Jidhu Mohan, 683578 Kochi, Kerala (IN); RICHARDSON, Renith, 560071 Bangalore, Karnataka (IN)
(74) Representative: Patentanwaltskanzlei WILHELM & BECK

(57) **Abstract**

The present invention relates a method and system for managing execution of an industrial task in a shared control environment (100). The method comprises identifying an industrial task to be executed in a technical installation (106). Further, the method comprises determining one or more resources (108A-N) for executing the identified task based on one or more criteria. Also, the method comprises segmenting and assigning the identified task between the determined one or more resources (108A-N) based on a first set of parameters. Also, the method comprises dynamically managing the execution of the segmented task between the determined one or more resources (108A-N).

## Description

The present invention generally relates to the field of computing systems, and more particularly relates to a method and system for managing execution of an industrial task in a shared control environment.

In current systems of transformation in manufacturing demographics from mass production to mass customization (Industry 4.0), advances on human-machine interaction in industries has taken many forms. As machines get more intelligent (human like) their interactions with humans shall become more dependent on their individual capabilities and the common task to be executed. This calls for dynamic sharing of sub-tasks among the interacting entities (human and machines). Shared autonomy (shared controlling) integrates the intelligence of human and machines in order to complete the task effectively. Shared autonomy mainly envisions the human intervention for high-level reasoning and planning to accomplish a complex task. In accordance, several existing mechanisms supports various forms of human-machine interaction such as single-human single-machine, multiple humans-single machine interaction, multiple humans-multiple machines interaction, and single human-multiple machines interaction. However, in all of such mechanism, one of the limiting factors is the communication bandwidth between both interacting entities (human and machine). The machines interact with each other with high bandwidth. But the human-machine interactions are usually very slow. Also, the interaction methods between the human and the machine are visual or sensory or audio based, with which a machine may not be able to communicate efficiently with human at a speed or accuracy demanded by the task to be completed and vice-versa. Another challenge is, in the case of task sharing between the interacting entities. The human and machine or robot must work for a common goal. This requires a flexible and an intelligent handshake between the human and the machine or robot for completing the goal successfully.

Therefore, there is always a constant need for shared control based method and system for managing execution of an industrial task.

Therefore, it is an object of the present invention to provide a method and system for managing execution of an industrial task in a shared control environment.

The object of the present invention is achieved by a method for managing execution of an industrial task in a shared control environment. The method comprises identifying an industrial task to be executed in a technical installation. The industrial task may be relevant to industries such as healthcare, factory, mobile or transportation, energy and the like. Further, the method comprises determining one or more resources for executing the identified task based on one or more criteria. The one or more resources comprises at least one industrial asset and an operator. Also, the method comprises segmenting and assigning the identified task between the determined one or more resources based on a first set of parameters. The segmented task assigned to the determined one or more resources are dynamic in nature and are based on level of execution of the industrial task. Also, the method comprises dynamically managing the execution of the segmented task between the determined one or more resources. The determined one or more resources execute the segmented task in a collaborative manner.
In a preferred embodiment, in determining the one or more resources for executing the identified task based on one or more criteria, the method comprises determining at least one operator from a pre-stored list of operators, suitable for executing the identified task based on one or more parameters associated with each of the pre-stored list of operators. Further, the method comprises determining at least one industrial asset capable of executing the identified task in collaboration with the determined operator based on one or more machine parameters associated with the at least one industrial asset. Also, the method comprises validating the capability of the determined at least one operator and the determined at least one industrial asset by executing one or more test operations related to the identified industrial task. Further, the method comprises outputting the determined at least one operator and the determined at least one industrial asset as the one or more resources for executing the identified task upon successful validation of the capability of the determined at least one operator and the determined at least one industrial asset.

In segmenting and assigning the identified task between the determined one or more resources based on a first set of parameters, the method comprises determining one or more sub tasks to be performed within the identified task by parsing the identified task. Further, the method comprises segmenting the identified task into respective task segments based on the determined one or more sub tasks to be performed. Also, the method comprises determining one or more actions to be executed corresponding to the determined one or more sub tasks to be performed.

Additionally, the method comprises assigning at least one of the one or more resources to each of the determined one or more actions to be executed.

Further, the method comprises segmenting the identified task into respective resource segment based on the assignment.
In assigning at least one of the one or more resources to each of the determined one or more actions to be executed, the method comprises receiving inputs indicating actions completed at a given time interval by the one or more resources using a communication link. Further, the method comprises determining level of execution of the industrial task based on received inputs. Also, the method comprises validating the assignment of the one or more resources to each of the determined one or more actions based on the determined level of execution. Also, the method comprises determining whether the current assignment of the one or more resources to each of the determined one or more actions requires a modification based on the validation results.

In determining whether the current assignment of the one or more resources to each of the determined one or more actions requires a modification based on the validation results, the method comprises dynamically modifying the assignment of the one or more resources to each of the determined one or more actions based on a negative validation result. Also, in determining whether the current assignment of the one or more resources to each of the determined one or more actions requires a modification based on the validation results, the method comprises retaining the current assignment of the one or more resources to each of the determined one or more actions based on a positive validation result.

In dynamically managing the execution of the segmented task between the determined one or more resources, the method comprises generating control signals for collaboratively executing the segmented task by the determined one or more resources. Further, the method comprises establishing bidirectional communication links with the determined one or more resources and between the determined one or more resources based on type of one or more resources. Also, the method comprises transmitting the generated control signals to the determined one or more resources via the established bidirectional communication links (either wired or wireless).

In dynamically managing the execution of the segmented task between the determined one or more resources, the method comprises monitoring state of execution of the segmented task based on one or more feedback control signals received from the determined one or more resources. Further, the method comprises controlling the execution of the segmented task based on the state of execution of the segmented task.

In controlling the execution of the segmented task based on the state of execution of the segmented task, the method comprises analyzing the one or more feedback signals received from the determined one or more resources. The method further comprises determining whether the one or more actions to be performed requires a modification based on the analyzed one or more feedback signals. Also, the method comprises modifying the one or more actions to be performed by the determined one or more resources. Further, the method comprises generating one or more updated control signals corresponding to the modified one or more actions to be performed. Furthermore, the method comprises transmitting the generated one or more updated control signals to the respective one or more resources via the bidirectional communication links, thereby controlling the execution of the segmented task.

In controlling the execution of the segmented task based on the state of execution of the segmented task, the method comprises analyzing interactions between the one or more resources based on the received one or more feedback signals. The method further comprises controlling interactions between the one or more resources based on the analysis.

In controlling interactions between the one or more resources based on the analysis, the method comprises allowing the one or more resources to dynamically interact and execute the one or more actions required to complete the industrial task. The interactions between the one or more resources are dynamic in nature and the interactions comprises modulatory control link between one or more industrial assets and a virtual control link between at least one industrial asset and the operator.

In dynamically managing the execution of the segmented task between the determined one or more resources, the method comprises determining whether the execution of the segmented task is completed based on the monitored state of execution. The method further comprises repeating the step of monitoring the state of execution of the segmented task until the segmented task is completed.

In determining whether the execution of the segmented task is completed based on the monitored state of execution, the method comprises terminating the execution of the segmented task between the determined one or more resources if the execution of the segmented task is completed.

The object of the present invention is also be achieved by a computing system for managing execution of an industrial task in a shared control environment. The computing system may comprise one or more processors and a memory coupled to the one or more processors. The memory comprises a task management module stored in the form of machine-readable instructions and executable by the one or more processors.

The task management module is configured for performing the method described above.

The object of the invention can also be achieved by an industrial asset. The industrial asset comprises one or more processor(s) and
a memory coupled to the one or more processor (s). The memory comprises a task execution management module stored in the form of machine-readable instructions executable by the one or more processor(s). The task execution management module is configured for receiving one or more actions to be executed from a computing system via a communication link. Further, the task execution management module is configured for executing the one or more actions for completion of an industrial task in collaboration with an operator based on set of parameters. Also, the task execution management module is configured for reporting state of execution of the one or more actions executed to the computing system using one or more feedback signals.

The object of the invention can also be achieved by a shared control environment comprising a computing system, and a technical installation communicatively coupled to the computing system via a communication network. The technical installation comprises one or more resources configured for executing an industrial task. The one or more resources comprises at least one operator and at least one industrial asset.

The object of the invention can also be achieved by a computer-program product, having machine-readable instructions stored therein, that when executed by a processor, causes the processor to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a schematic representation of a shared control environment capable of managing execution of an industrial task, according to an embodiment of the present invention;
- FIG 2: is a block diagram of a computing system such as those shown in FIG 1, depicting various components to implement embodiments of the present invention;
- FIG 3: is a block diagram of a task management module, such as those shown in FIG 1 and 2, capable of managing execution of an industrial task, according to the embodiment of the present invention;
- FIG 4: is a schematic representation of a control loop feedback mechanism for managing execution of an industrial task, according to an embodiment of the present invention;
- FIG 5: is a schematic representation of an industrial communication network capable of executing an industrial task, according to an embodiment of the present invention;
- FIG 6: is a block diagram of an industrial asset such as those shown in FIG 1, depicting various components to implement embodiments of the present invention;
- FIG 7: is a block diagram of an industrial asset such as those shown in FIG. 6, according to an embodiment of the present invention; and
- FIG 8: is a process flowchart illustrating an exemplary method of managing execution of an industrial task, according to the embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

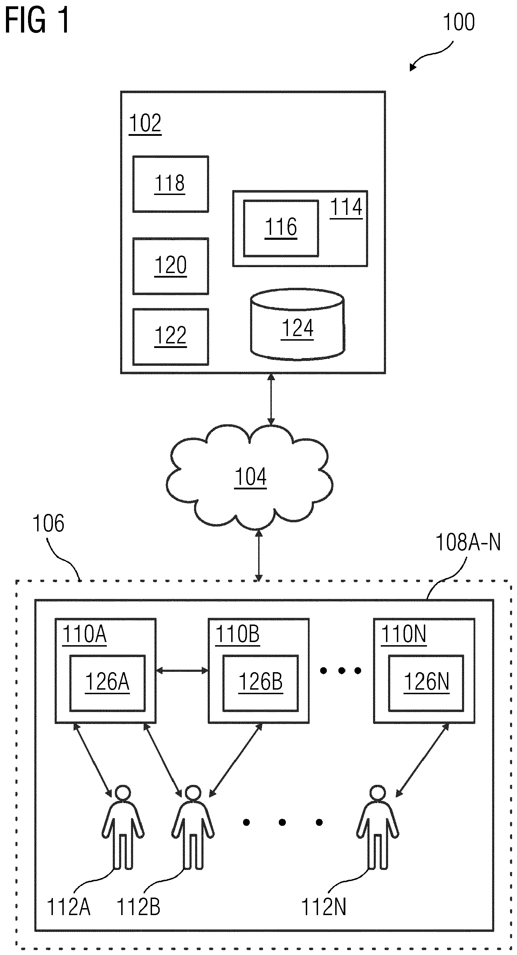

FIG 1 is a schematic representation of a shared control environment 100 capable of managing execution of an industrial task, according to an embodiment of the present invention. Particularly, FIG 1 depicts a computing system 102 which is capable of delivering remote applications for managing a technical installation 106 comprising one or more resources 108A-N. The one or more resources 108A-N further comprises one or more industrial assets 110A-N communicatively coupled to one or more operators 112A-B. Each of the one or more industrial assets 110A-N further comprises task execution management module 126A-N. The one or more resources 108AN may include servers, robots, industrial equipment(s), human, sensors, lighting system and the like. As used herein, "computing environment" (also referred as "shared control environment) refers to a processing environment comprising configurable computing physical and logical resources, for example, networks, servers, storage, applications, services, etc., and data distributed over the computing platform. The computing environment 100 provides on-demand network access to a shared pool of the configurable computing physical and logical resources. The shared control environment or the computing environment 100 allows either human or machine or their combinations thereof to work collaboratively to accomplish a specific task.

The computing system 102 is connected to the technical installation 106 via a network 104 (e.g., industrial ethernet or Internet). The computing system 102 may be a public cloud, a private cloud, and/or a hybrid cloud or even an edge system configured to provide dedicated remote services to its users.

The computing system 102 comprises a computing platform 114, a server 118 including hardware resources and an operating system (OS), a network interface 120, a database 124 and application program interfaces (APIs) 122. The network interface 120 enables communication between the computing system 102 and the technical installation 106. The interface (not shown in FIG 1) may allow the engineers to access multimodal data stored at the computing system 102 and perform one or more actions on the multimodal data as same instance. The server 118 may include one or more servers on which the OS is installed. The servers 118 may comprise one or more processors, one or more storage devices, such as, memory units, for storing data and machine-readable instructions for example, applications and application programming interfaces (APIs) 122, and other peripherals required for providing computing functionality. The computing platform 114 is a platform which enables functionalities such as data reception, data processing, data rendering, data communication, etc. using the hardware resources and the OS of the servers 118 and delivers the aforementioned remote services using the application programming interfaces 122 deployed therein. The computing platform 114 may comprise a combination of dedicated hardware and software built on top of the hardware and the OS.

As used herein the communication network 104, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a long-term evolution (LTE) mobile communication network, a public telephone network, etc., a local area network, a wide area network, an internet connection network, an infrared communication network, etc., or a network formed from any combination of these networks.

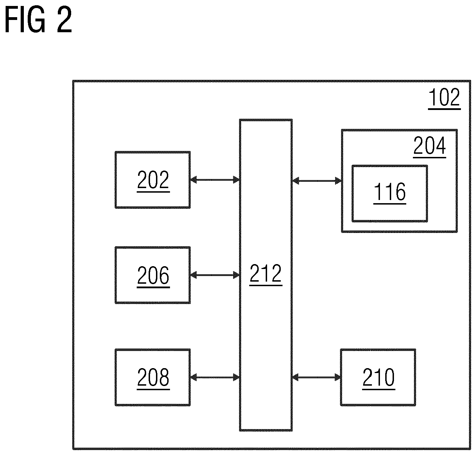

The computing platform 114 comprises a task management module 116. A detailed view of various components of the computing system 102 is shown in FIG 2. The computing system 102 may be a standalone system, edge system or a system on a cloud. In a preferred embodiment, the computing system 102 is a cloud based system capable of managing execution of industrial tasks. The computing system 102 has a smart decision making capability for handling execution of the industrial tasks between the one or more resources 108A-N. Unlike the conventional systems, which require human expertise in executing the industrial task between the one or more resources 108A-N, the current computing system 102 is in itself capable of making a best suitable decision for selecting best suitable resources, allocating the tasks between those selected one or more resources 108A-N, controlling completely the execution of the tasks, and hence achieving more efficient and smoother collaboration between the human and the machine in order to accomplish the task. Hence, in this case, the entire control of execution of the task is handled by the computing system 102 without involvement of a human or human decision.

The database 124 stores the information relating to the technical installation 106. The database 124 is, for example, a structured query language (SQL) data store or a not only SQL (NoSQL) data store. The database 124 is configured as cloud-based database implemented in the computing environment 100, where computing resources are delivered as a service over the computing platform 114. The database 124, according to another embodiment of the present invention, is a location on a file system directly accessible by the computing platform 114. The database 124 is configured to store industrial tasks and other artifacts pertaining to the output of the execution of the industrial task.

The computing system 102 may comprise a plurality of servers or processors (also known as 'cloud infrastructure'), which are geographical distributed, connected with each other via the network 104. A dedicated platform (hereinafter referred to as 'computing platform') is installed on the servers/processors for providing above functionality as an application (hereinafter referred to as 'remote application'). The computing platform 114 may comprise a plurality of software programs executed on one or more servers or processors of the computing system 102 to enable delivery of the requested applications to the devices and its users.

FIG 2 is a block diagram of a computing system 102 such as those shown in FIG 1, depicting various components to implement embodiments of the present invention. In FIG 2, the computing system 102 includes a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes a task management module 116 stored in the form of machine-readable instructions on any of the above-mentioned storage media and may be in communication with and executed by the processor(s) 202.

When executed by the processor(s) 202, the task management module 116 causes the processor(s) 202 to manage execution of an industrial task in a shared control environment 100. The task management module 116 causes the processor(s) 202 to identify an industrial task to be executed in a technical installation 106. The industrial task comprises for example, but not limited to, painting of "n" number of car body shells blue and "m" number of car body shells black using a set of manual, semi-automated and fully automated paint booths. Another example pf industrial task comprises, but nOt limited to, manufacturing of "n" number of motor casing using many different machines such as NC, lathes, drilling, milling and the like, and associated skilled & unskilled workers. The task management module 116 causes the processor(s) 202 to determine one or more resources 108A-N for executing the identified task based on one or more criteria. The one or more resources 108A-N comprises at least one industrial asset 110A-N and an operator 112A-N. The one or more resources 108A-N may be one or more field equipment, human, and the like. The technical installation 106 may be an industrial plant.

Further, the task management module 116 causes the processor(s) 202 to segment and assign the identified task between the determined one or more resources 108A-N based on a first set of parameters. The segmented task assigned to the determined one or more resources 108A-N are dynamic in nature and are based on level of execution of the industrial task. Further, the task management module 116 causes the processor(s) 202 to dynamically manage the execution of the segmented task between the determined one or more resources 108A-N. The determined one or more resources 108A-N execute the segmented task in a collaborative manner.

Further, in determining the one or more resources 108A-N for executing the identified task based on one or more criteria, the task management module 116 causes the processor(s) 202 to determine at least one operator 112A-N from a pre-stored list of operators, suitable for executing the identified task based on one or more parameters associated with each of the pre-stored list of operators. The task management module 116 further causes the processor(s) 202 to determine at least one industrial asset 110A-N capable of executing the identified task in collaboration with the determined operator 112A-N based on one or more machine parameters associated with the at least one industrial asset 110A-N. Furthermore, the task management module 116 causes the processor(s) 202 to validate the capability of the determined at least one operator 112A-N and the determined at least one industrial asset 110A-N by executing one or more test operations related to the identified industrial task. Furthermore, the task management module 116 causes the processor(s) 202 to output the determined at least one operator 112A-N and the determined at least one industrial asset 110A-N as the one or more resources 108A-N for executing the identified task upon successful validation of the capability of the determined at least one operator 112A-N and the determined at least one industrial asset 110A-N.

In segmenting and assigning the identified task between the determined one or more resources 108A-N based on a first set of parameters, the task management module 116 causes the processor(s) 202 to determine one or more sub tasks to be performed within the identified task by parsing the identified task. Further, the task management module 116 causes the processor(s) 202 to segment the identified task into respective task segments based on the determined one or more sub tasks to be performed. Also, the task management module 116 causes the processor(s) 202 to determine one or more actions to be executed corresponding to the determined one or more sub tasks to be performed. Furthermore, the task management module 116 causes the processor(s) 202 to assign at least one of the one or more resources 108A-N to each of the determined one or more actions to be executed. Also, the task management module 116 causes the processor(s) 202 to segment the identified task into respective resource segment based on the assignment.

In assigning at least one of the one or more resources 108A-N to each of the determined one or more actions to be executed, the task management module 116 causes the processor(s) 202 to receive inputs indicating actions completed at a given time interval by the one or more resources 108A-N using a communication link. Further, the task management module 116 causes the processor(s) 202 to determine level of execution of the industrial task based on received inputs. Also, the task management module 116 causes the processor(s) 202 to validate the assignment of the one or more resources 108A-N to each of the determined one or more actions based on the determined level of execution. Further, the task management module 116 causes the processor(s) 202 to determine whether the current assignment of the one or more resources 108A-N to each of the determined one or more actions requires a modification based on the validation results.

In determining whether the current assignment of the one or more resources 108A-N to each of the determined one or more actions requires a modification based on the validation results, the task management module 116 causes the processor(s) 202 to dynamically modify the assignment of the one or more resources 108A-N to each of the determined one or more actions based on a negative validation result.

In determining whether the current assignment of the one or more resources 108A-N to each of the determined one or more actions requires a modification based on the validation results, the task management module 116 causes the processor(s) 202 to retain the current assignment of the one or more resources 108A-N to each of the determined one or more actions based on a positive validation result.

In dynamically managing the execution of the segmented task between the determined one or more resources 108A-N, the task management module 116 causes the processor(s) 202 to generate control signals for collaboratively executing the segmented task by the determined one or more resources 108A-N. Also, the task management module 116 causes the processor(s) 202 to establish bidirectional communication links with the determined one or more resources 108AN and between the determined one or more resources 108A-N based on type of one or more resources. Further, the task management module 116 causes the processor(s) 202 to transmit the generated control signals to the determined one or more resources 108A-N via the established bidirectional communication links.

In dynamically managing the execution of the segmented task between the determined one or more resources 108A-N, the task management module 116 causes the processor(s) 202 to monitor state of execution of the segmented task based on one or more feedback control signals received from the determined one or more resources 108A-N. Also, the task management module 116 causes the processor(s) 202 to control the execution of the segmented task based on the state of execution of the segmented task. In controlling the execution of the segmented task based on the state of execution of the segmented task, the task management module 116 causes the processor(s) 202 to analyze the one or more feedback signals received from the determined one or more resources 108A-N. Further, the task management module 116 causes the processor(s) 202 to determine whether the one or more actions to be performed requires a modification based on the analyzed one or more feedback signals. Also, the task management module 116 causes the processor(s) 202 to modify the one or more actions to be performed by the determined one or more resources 108A-N. Further, the task management module 116 causes the processor(s) 202 to generate one or more updated control signals corresponding to the modified one or more actions to be performed. Also, the task management module 116 causes the processor(s) 202 to transmit the generated one or more updated control signals to the respective one or more resources 108A-N via the bidirectional communication links, thereby controlling the execution of the segmented task.

In controlling the execution of the segmented task based on the state of execution of the segmented task, the task management module 116 causes the processor(s) 202 to analyze interactions between the one or more resources 108A-N based on the received one or more feedback signals. Further, the task management module 116 causes the processor(s) 202 to control interactions between the one or more resources 108A-N based on the analysis. Also, in controlling interactions between the one or more resources 108A-N based on the analysis, the task management module 116 causes the processor(s) 202 to allow the one or more resources 108A-N to dynamically interact and execute the one or more actions required to complete the industrial task. The interactions between the one or more resources 108A-N are dynamic in nature and the interactions comprises modulatory control link between one or more industrial assets 110A-N and a virtual control link between at least one industrial asset 110A-N and the operator 112A-N.

In dynamically managing the execution of the segmented task between the determined one or more resources 108A-N, the task management module 116 causes the processor(s) 202 to determine whether the execution of the segmented task is completed based on the monitored state of execution. Also, the task management module 116 causes the processor(s) 202 to repeat the step of monitoring the state of execution of the segmented task until the segmented task is completed. In determining whether the execution of the segmented task is completed based on the monitored state of execution, the task management module 116 causes the processor(s) 202 to terminate the execution of the segmented task between the determined one or more resources 108A-N if the execution of the segmented task is completed.

The communication interface 206 is configured for establishing communication sessions between the technical installation 106, specifically the one or more resources 108A-N, and the computing system 102. The network interface 208 helps in managing network communications between the one or more resources 108A-N, and the computing system 102.

The input-output unit 210 may include input devices a keypad, touch-sensitive display, camera (such as a camera receiving gesture-based inputs), etc. capable of receiving one or more input signals, such as user commands to process equipment data. Also, the input-output unit 210 may be a display unit for displaying a graphical user interface which visualizes the industrial tasks and also displays the status information associated with each set of actions performed. The bus 212 acts as interconnect between the processor 202, the memory 204, and the input-output unit 210.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

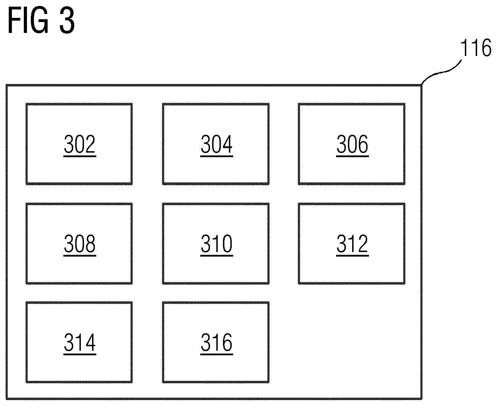

FIG 3 is a block diagram of a task management module 116, such as those shown in FIG 1 and 2, capable of managing execution of an industrial task in a shared control environment 100, according to the embodiment of the present invention. In FIG 3, the task management module 116 comprises a task identifier module 302, a resource determination module 304, a segmentation module 306, a task execution manager 308, a signal generation module 310, a communication module 312, a signal transmitter module 314, and a database 316.

The task identifier module 302 is configured for identifying an industrial task to be executed in a technical installation 106. The industrial task comprises a set of operational actions to be executed for completing an end goal. For example, the end goal may be inventory check, inspection, acceptance or rejection of finished parts, participation in assembly process or performing machined operation. Alternatively, the end goal may be delivering tools, monitoring patient, suggesting surgical steps and the like. The technical installation 106 may be an industrial plant. Alternatively, the technical installation 106 may be a health care setup.

The resource determination module 304 is configured for determining one or more resources 108A-N for executing the identified task based on one or more criteria. The one or more resources 108A-N comprises at least one industrial asset 110A-N and an operator 112A-N. The one or more criteria comprises level of human expertise, operation time of machine/software and repetitive human task and the like. Specifically, the resource determination module 304 is configured for determining at least one operator 112A-N from a pre-stored list of operators, suitable for executing the identified task based on one or more parameters associated with each of the pre-stored list of operators. The one or more parameters comprises human expertise, repetitive human task, past performance, proximity, and the like. Further, the resource determination module 304 is configured for determining at least one industrial asset 110A-N capable of executing the identified task in collaboration with the determined operator 112A-N based on one or more machine parameters associated with the at least one industrial asset 110A-N. The one or more machine parameters comprises prior knowledge, task specific intelligence, experience and context awareness. The context awareness is directly derived from the sensory input. The task specific intelligence is fine-tuned and is machine specific. The prior knowledge is the deep pre-trained in unsupervised manner and evaluated with human in loop. This will help the machine or the industrial asset 110A-N to understand the aftereffects of mistakes and take actions or report it to the computing system 102.

Further, the resource determination module 304 is configured for validating the capability of the determined at least one operator 112A-N and the determined at least one industrial asset 110AN by executing one or more test operations related to the identified industrial task. The one or more test operations comprises accuracy check, performance check, behavior check, temporal check and the like. The results of the test operations indicate the capability of the operator 112AN and the industrial asset 110A-N to perform an action in relation to the identified industrial task. The capability is determined by computing a score or a weightage matrix based on the results of test operations.

Further, the resource determination module 304 is configured for outputting the determined at least one operator 112A-N and the determined at least one industrial asset 110A-N as the one or more resources 108A-N for executing the identified task upon successful validation of the capability of the determined at least one operator 112A-N and the determined at least one industrial asset 110A-N. For example, after performing one of more tests on all or selected number of industrial assets 110A-N and operators 112A-N, say, industrial asset 110A is selected along with operator 112B to be capable of executing the given task based on the validation step. Such selected industrial asset 110A and the operator 112B are outputted as the one or more resources 108A-N for executing the identified task.

The segmentation module 306 is configured for segmenting and assigning the identified task between the determined one or more resources 108A-N based on a first set of parameters. The segmented task assigned to the determined one or more resources 108A-N are dynamic in nature and are based on level of execution of the industrial task. The first set parameters comprise human expertise, operation time of machine or software and repetitive human task, prior knowledge of the machine, task specific intelligence of the machine, experience of the machine and context awareness of the machine. Specifically, the segmentation module 306 is configured for determining one or more sub tasks to be performed within the identified task by parsing the identified task. For example, each industrial task may comprise a sequential sub tasks. In case if the industrial task comprises production of a car, the one or more sub tasks may comprise wind screen fixing of a car, wheels fixing and alignment, and the like.

Further, the segmentation module 306 is configured for segmenting the identified task into respective task segments based on the determined one or more sub tasks to be performed. The task segments comprise priority based tasks, complexity based tasks, supervisory tasks and the like. Further, the segmentation module 306 is configured for determining one or more actions to be executed corresponding to the determined one or more sub tasks to be performed. For example, one or more actions comprises moving a machine close to a car assembling one or more parts of the car or spraying paint on the car and the like. The segmentation module 306 is configured for assigning at least one of the one or more resources 108A-N to each of the determined one or more actions to be executed. The segmentation module 306 is configured for segmenting the identified task into respective resource segment based on the assignment. For example, each of the sub task is assigned to each of the resources 108A-N based on the resource segment type. If the resource segment type is machine driven, then the respective sub task is assigned to the industrial asset 110A-N and if the resource segment type is a human driven, then the respective sub task is assigned to the operator 112A-N.

In order to assign at least one of the one or more resources 108A-N to each of the determined one or more actions to be executed, the segmentation module 306 is configured for receiving inputs indicating actions completed at a given time interval by the one or more resources 108AN using a communication link. Each of the determined one or more resources 108A-N periodically send a report of task execution to the segmentation module 306 via the communication link. This is used by the segmentation module 306 to determine level of execution of the industrial task based on received inputs. Further, the segmentation module 306 is configured for validating the assignment of the one or more resources 108A-N to each of the determined one or more actions based on the determined level of execution. For example, if the report indicates that the level of execution is incomplete by one of the resources, then the capability of such resource and other parameters are validated.

Furthermore, the segmentation module 306 is configured for then determining whether the current assignment of the one or more resources 108A-N to each of the determined one or more actions requires a modification based on the validation results. For example, if the validation indicates that performance of the one or more resources are poor, then the segmentation module 306 determines that the one or more resources are incapable to further proceed with execution of assigned tasks, and hence requires a modification to the assignment of the task. If it is determined that the current assignment requires a modification, then the segmentation module is further configured for dynamically modifying the assignment of the one or more resources 108A-N to each of the determined one or more actions based on a negative validation result. For example, new resources 108A-N may be now assigned to execute the actions based on the determination. In case of a positive validation result, the segmentation module 306 is configured for retaining the current assignment of the one or more resources 108A-N to each of the determined one or more actions.

The task execution manager 308 is configured for dynamically managing the execution of the segmented task between the determined one or more resources 108A-N. The determined one or more resources 108A-N execute the segmented task in a collaborative manner. Specifically, the task execution manager 308 is configured for monitoring state of execution of the segmented task based on one or more feedback control signals received from the determined one or more resources 108A-N. The state of execution comprises completed, incomplete, interrupted, connection unavailable and the like. Further, the task execution manager 308 is configured for controlling the execution of the segmented task based on the state of execution of the segmented task. In particular, in order to control the execution of the segmented task, the task execution manager 308 is configured for analyzing the one or more feedback signals received from the determined one or more resources 108A-N. Further, the task execution manager 308 is configured for determining whether the one or more actions to be performed requires a modification based on the analyzed one or more feedback signals. The task execution manager 308 is further configured for modifying the one or more actions to be performed by the determined one or more resources 108A-N. The one or more modification comprises changing assignment of one or more resources, changing sequence of sub tasks, or adding or removing sub tasks and the like.

Further, the task execution manager 308 is configured for analyzing interactions between the one or more resources 108A-N based on the received one or more feedback signals. Also, the task execution manager 308 is configured for controlling interactions between the one or more resources 108A-N based on the analysis. In order to control interactions between the one or more resources 108A-N, the task execution manager 308 is configured for allowing the one or more resources 108A-N to dynamically interact and execute the one or more actions required to complete the industrial task. For example, the task execution manager 308 enables the one or more resources 108A-N to collaborate with each other in order to accomplish the task assigned to it. The interactions between the one or more resources 108A-N are dynamic in nature and the interactions comprises modulatory control link between one or more industrial assets 110A-N and a virtual control link between at least one industrial asset 110A-N and the operator 112A-N.

The task execution manager 308 is configured for determining whether the execution of the segmented task is completed based on the monitored state of execution. Until the task is completed, the task execution manager 308 is configured for repeating the step of monitoring the state of execution of the segmented task. Also, the task execution manager 308 is configured for terminating the execution of the segmented task between the determined one or more resources 108A-N if the execution of the segmented task is completed.

The signal generation module 310 is configured for generating control signals for collaboratively executing the segmented task by the determined one or more resources 108A-N. Also, during the controlling of execution of the segmented task based on the state of execution of the segmented task, the signal generation module 310 is configured for generating one or more updated control signals corresponding to the modified one or more actions to be performed. That is, when the one or more actions to be performed are modified, then corresponding update control signals are generated.

The communication module 312 is configured for establishing bidirectional communication links with the determined one or more resources 108A-N and between the determined one or more resources 108A-N based on type of one or more resources. The type of one or more resources may be a machine type or an operator type. For example, the communication links between the at least one industrial assets 110A-N may be modulatory control link. The modulatory control link influences the further actions by the receiving machine rather than provide the direct control signals to the other industrial assets 110A-N to take or stop any task. This means, the modulatory control link influences the probability of the industrial assets 110A-N taking an action. The modulatory control is generated by an industrial asset 110A-N when it senses the adverse or favorable scenarios. The modulatory control may cause different immediate actions on different industrial assets 110A-N. This depends on the experience or skill level of the individual industrial assets 110A-N, which itself have multiple components. However, the combined actions shall result in overall smooth operation of the technical installation 106.

Also, each of the industrial assets 110A-N and the operators are connected using virtual communication links. The virtual connections or communication links comprises via wireless communication channels or wired communication channels. For example, the virtual communication links comprises visual or audio or haptic.

The signal transmitter module 314 is configured for transmitting the generated control signals to the determined one or more resources 108A-N via the established bidirectional communication links. Further, while controlling the execution of the segmented task based on the state of execution of the segmented task, the signal transmitter module 314 is configured for transmitting the generated one or more updated control signals to the respective one or more resources 108AN via the bidirectional communication links, thereby controlling the execution of the segmented task.

The database 316 is configured for storing one or more industrial tasks, sub tasks, actions, one or more resources, information related to one or more industrial assets 110A-N, one or more operators 112A-N, validation results, control signals, state of execution, feedback signals and the like.

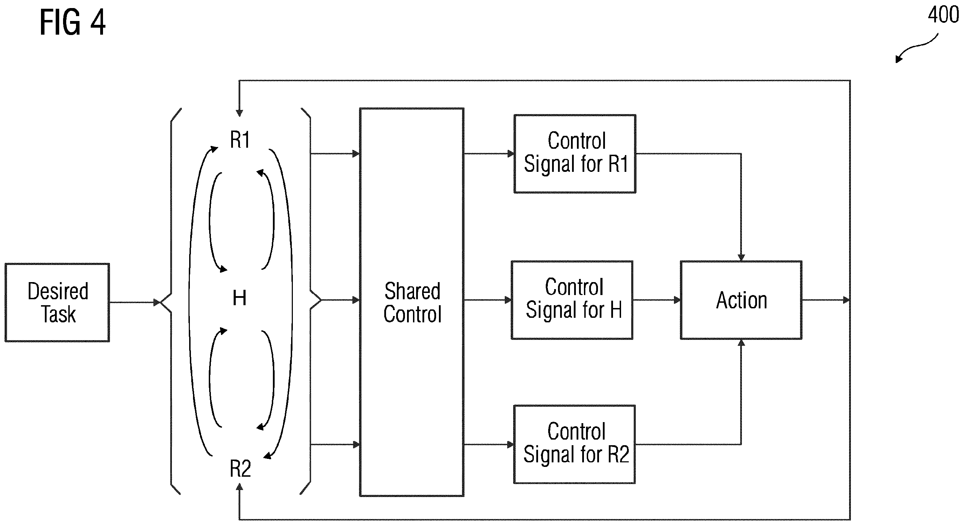

FIG 4 is a schematic representation of a control loop feedback mechanism 400 for managing execution of an industrial task, according to an embodiment of the present invention. In FIG 4, R1 and R2 are the industrial assets, such as the industrial assets 110A-N shown in FIG. 1. H is a human operator, such as the operator 112A-N shown in FIG 1. According to an embodiment, a desired task to be executed is divided between R1, R2 and H respectively based on various criteria as explained above. R1, R2 and H work in a collaborative manner to achieve the desired task. This results in a shared control between R1, R2 and H. Such shared control enables R1, R2 and H to generate respective control signals for each of R, R2 and H. Seamless collaboration and coordination between the generated control signals results in action that is performed for execution of the desired task. Series of such actions leads to achieving the execution the desired task. This control loop feedback mechanism helps achieve the desired task in a collaborative and efficient manner.

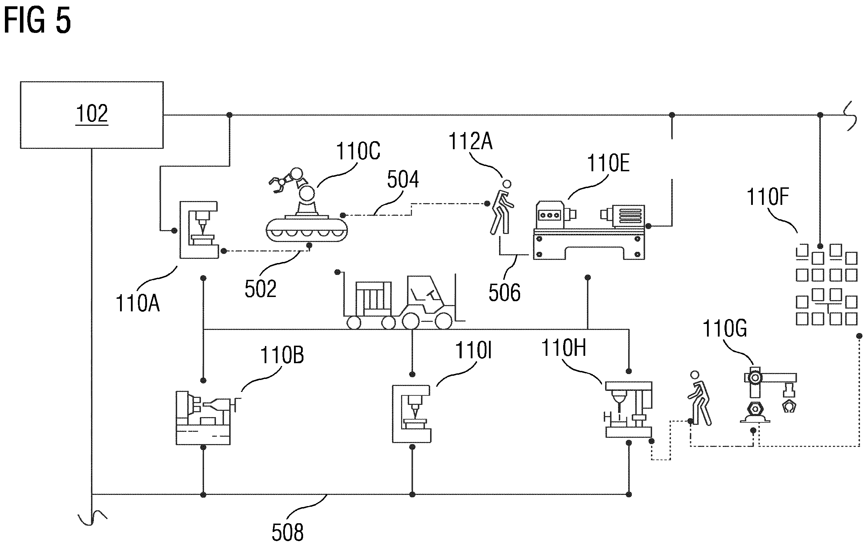

FIG 5 is a schematic representation of an industrial communication network 500 capable of executing an industrial task, according to an embodiment of the present invention. In FIG 5, a technical installation 106 connected to a computing system 102 is depicted. The technical installation 106 comprises one or more industrial assets 110A-I and one or more operator 112A-B. Each of the industrial assets 110A-I are connected to other industrial assets 110A-I via a bidirectional communication link 502. This communication link 502 generally is a high bandwidth link. The communication link 502 or the modulatory control does not provide direct control signals to the other industrial assets to take or stop any task, rather the communication link 502 influences the further actions by the receiving machine. This means, it influences the probability of the machine taking an action. The modulatory control link 502 is generated by a machine when it senses the adverse or favorable scenarios. The modulatory control link 502 may cause different immediate actions on different machines. This depends on the experience or skill level of the individual asset 110A-N, which itself have multiple components.

Further, each of the industrial assets 110A-I are connected to at least one human operator 112A-B via a virtual communication link 504, 506. This link may be low bandwidth link. Also, the communication may be visual mode, haptic mode or audio mode. Each of the industrial assets 110A-I are communicatively connected to the computing system 102 via a supervisory monitoring link, which is further connected to a cloud link 508. Using the communication links 502, 504, 506, and 508, the industrial assets 110A-I and the human operators 112A-B are monitored and controlled by the computing system 102 and thus achieve the desired task.

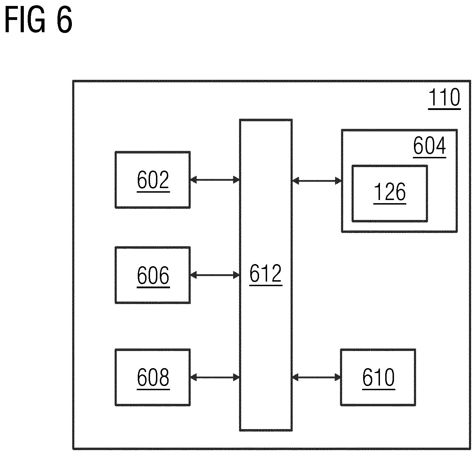

FIG 6 is a block diagram of an industrial asset 110 such as those shown in FIG 1, depicting various components to implement embodiments of the present invention. In FIG 6, the industrial asset 110 includes a processor(s) 602, an accessible memory 604, a communication interface 606, a network interface 608, an input/output unit 610, and a bus 612.

The processor(s) 602, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 602 may also include embedded controllers, such as generic or programmable logic devices or arrays, application specific integrated circuits, single-chip computers, and the like.

The memory 604 may be non-transitory volatile memory and non-volatile memory. The memory 604 may be coupled for communication with the processor(s) 602, such as being a computer-readable storage medium. The processor(s) 602 may execute machine-readable instructions and/or source code stored in the memory 604. A variety of machine-readable instructions may be stored in and accessed from the memory 604. The memory 604 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 604 includes a task execution management module 126 stored in the form of machine-readable instructions on any of the above-mentioned storage media and may be in communication with and executed by the processor(s) 602.

When executed by the processor(s) 602, the task execution management module 126 causes the processor(s) 602 to receive one or more actions to be executed from a computing system (102) via a communication link. Further, the task execution management module 126 causes the processor(s) 602 to execute the one or more actions for completion of an industrial task in collaboration with an operator 112A-N based on set of parameters. The set of parameters comprises prior knowledge, task specific intelligence, experience and context awareness. The context

awareness is directly derived from the sensory input. The task specific intelligence is fine-tuned and is machine specific. The prior knowledge is the deep pre-trained in unsupervised manner and evaluated with human in loop. Further, the task execution management module 126 causes the processor(s) 602 to report state of execution of the one or more actions executed to the computing system 102 using one or more feedback signals.

The communication interface 606 is configured for establishing communication sessions between the technical installation 106, and the computing system 102. The network interface 608 helps in managing network communications between the one or more resources 108A-N, and the computing system 102.

The input-output unit 610 may include input devices a keypad, touch-sensitive display, camera (such as a camera receiving gesture-based inputs), etc. capable of receiving one or more input signals, such as user commands to process equipment data. Also, the input-output unit 610 may be a display unit for displaying a graphical user interface which visualizes the industrial tasks and also displays the status information associated with each set of actions performed. The bus 612 acts as interconnect between the processor 602, the memory 604, and the input-output unit 610.

Those of ordinary skilled in the art will appreciate that the hardware depicted in FIG 6 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an industrial asset 110 as is unique to the present disclosure or necessary for an understanding of the present disclosure is depicted and described.

The remainder of the construction and operation of the computing system 102 may conform to any of the various current implementation and practices known in the art.

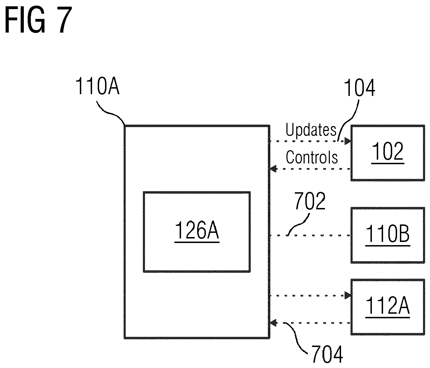

FIG 7 is a block diagram of an industrial asset 110A such as those shown in FIG. 6, according to an embodiment of the present invention. In FIG. 7, various communication links for an industrial asset 110A is depicted. For example, the industrial asset 110A comprises a task execution management module 126. The industrial asset 110A is communicatively coupled to the computing system 102 via network 104 for receiving control signals in order to execute the one or more actions and transmitting the updates or feedback signals back to the computing system 102. Further, the industrial asset 110A is connected to at least one other industrial asset 110B via the communication link 702. This link 702 is a modulatory control link as described above. Further, the industrial asset 110A is further connected to at least one human operator 112 via communication link 704. This link 704 is a virtual link as described above. Although, various communication links with respect to one industrial asset 118 is illustrated, one can envision that each industrial asset 110A-N in the technical installation 106 comprises similar communication links.

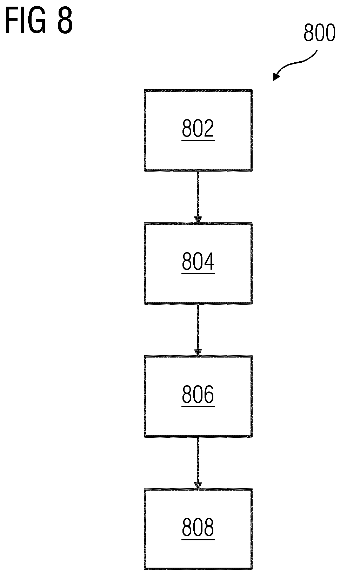

FIG 8 is a process flowchart 800 illustrating an exemplary method of managing execution of an industrial task, according to the embodiment of the present invention. At step 802, an industrial task to be executed in a technical installation 106 is identified. At step 804, one or more resources 108A-N for executing the identified task based on one or more criteria are determined. The one or more resources 108A-N comprises at least one industrial asset 110A-N and an operator 112AN. At step 806, the identified task is segmented and assigned between the determined one or more resources 108A-N based on a first set of parameters. The segmented task assigned to the determined one or more resources 108A-N are dynamic in nature and are based on level of execution of the industrial task. At step 808, the execution of the segmented task between the determined one or more resources 108A-N is dynamically managed. The determined one or more resources 108A-N execute the segmented task in a collaborative manner.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference list:

100-shared control environment
102-computing system
104-network
106-technical installation
108A-N-one or more resources
110A-N-industrial assets
112A-N-operators
114-computing platform
116-task management module
118-server
120-network interface
122-application program interfaces (APIs)
124-database
126-task execution management module
202-processor
204-memory
206-communication interface
208-network interface
210- input/output unit
212-bus
302- task identifier module
304-resource determination module
306-segmentation module
308-task execution manager
310-signal generation module
312-communication module
314-signal transmitter module
316-database
502-bidirectional communication link
504, 506 -virtual communication link
508-cloud link
602-processor
604-memory
606-communication interface
608-network interface
610-input/output unit
612-bus
702, 704 - communication link

## Claims

1. A method for managing execution of an industrial task in a shared control environment (100), the method comprising:
identifying, by a processor (202), an industrial task to be executed in a technical installation (106);
determining, by the processor(202), one or more resources (108A-N) for executing the identified task based on one or more criteria, wherein the one or more resources (108A-N) comprises at least one industrial asset (110A-N) and an operator (112A-N);
segmenting and assigning, by the processor(202), the identified task between the determined one or more resources (108A-N) based on a first set of parameters, wherein the segmented task assigned to the determined one or more resources (108A-N) are dynamic in nature and are based on level of execution of the industrial task; and
dynamically managing, by the processor (202), the execution of the segmented task between the determined one or more resources (108A-N), wherein the determined one or more resources (108A-N) execute the segmented task in a collaborative manner.

2. The method according to claim 1, wherein determining the one or more resources (108AN) for executing the identified task based on one or more criteria comprises:
determining at least one operator (112A-N), from a pre-stored list of operators, suitable for executing the identified task based on one or more parameters associated with each of the pre-stored list of operators;
determining at least one industrial asset (110A-N) capable of executing the identified task in collaboration with the determined operator (112A-N) based on one or more machine parameters associated with the at least one industrial asset (110A-N);
validating the capability of the determined at least one operator (112A-N) and the determined at least one industrial asset (110A-N) by executing one or more test operations related to the identified industrial task; and
outputting the determined at least one operator (112A-N) and the determined at least one industrial asset (110A-N) as the one or more resources (108A-N) for executing the identified task upon successful validation of the capability of the determined at least one operator (112A-N) and the determined at least one industrial asset (110A-N).

3. The method according to any of the preceding claims, wherein
segmenting and assigning the identified task between the determined one or more resources (108A-N) based on a first set of parameters comprises:
determining one or more sub tasks to be performed within the identified task by parsing the identified task;
segmenting the identified task into respective task segments based on the determined one or more sub tasks to be performed;
determining one or more actions to be executed corresponding to the determined one or more sub tasks to be performed; and
assigning at least one of the one or more resources (108A-N) to each of the determined one or more actions to be executed.

4. The method according to any of the preceding claims, further comprising:
segmenting the identified task into respective resource segment based on the assignment.

5. The method according to claim 3, wherein assigning at least one of the one or more resources (108A-N) to each of the determined one or more actions to be executed comprises:
receiving inputs indicating actions completed at a given time interval by the one or more resources (108A-N) using a communication link;
determining level of execution of the industrial task based on received inputs;
validating the assignment of the one or more resources (108A-N) to each of the determined one or more actions based on the determined level of execution; and
determining whether the current assignment of the one or more resources (108AN) to each of the determined one or more actions requires a modification based on the validation results.

6. The method according to claim 3, 4 or 5, wherein determining whether the current assignment of the one or more resources (108A-N) to each of the determined one or more actions requires a modification based on the validation results comprises:
dynamically modifying the assignment of the one or more resources (108A-N) to each of the determined one or more actions based on a negative validation result.

7. The method according to claim 3 to 6, wherein determining whether the current assignment of the one or more resources (108A-N) to each of the determined one or more actions requires a modification based on the validation results comprises:
retaining the current assignment of the one or more resources (108A-N) to each of the determined one or more actions based on a positive validation result.

8. The method according to any of the preceding claims, wherein dynamically managing the execution of the segmented task between the determined one or more resources (108AN) comprises:
generating control signals for collaboratively executing the segmented task by the determined one or more resources (108A-N);
establishing bidirectional communication links with the determined one or more resources (108A-N) and between the determined one or more resources (108A-N) based on type of one or more resources; and
transmitting the generated control signals to the determined one or more resources (108A-N) via the established bidirectional communication links.

9. The method according to any of the preceding claims, wherein dynamically managing the execution of the segmented task between the determined one or more resources (108AN) comprises:
monitoring state of execution of the segmented task based on one or more feedback control signals received from the determined one or more resources (108A-N); and
controlling the execution of the segmented task based on the state of execution of the segmented task.

10. The method according to any of the preceding claims, wherein controlling the execution of the segmented task based on the state of execution of the segmented task comprises:
analyzing the one or more feedback signals received from the determined one or more resources (108A-N);
determining whether the one or more actions to be performed requires a modification based on the analyzed one or more feedback signals;
modifying the one or more actions to be performed by the determined one or more resources (108A-N);
generating one or more updated control signals corresponding to the modified one or more actions to be performed; and
transmitting the generated one or more updated control signals to the respective one or more resources (108A-N) via the bidirectional communication links, thereby controlling the execution of the segmented task.

11. The method according to claim 9 or 10, wherein controlling the execution of the segmented task based on the state of execution of the segmented task comprises:
analyzing interactions between the one or more resources (108A-N) based on the received one or more feedback signals; and
controlling interactions between the one or more resources (108A-N) based on the analysis.

12. The method according to claim 11, wherein controlling interactions between the one or more resources (108A-N) based on the analysis comprises:
allowing the one or more resources (108A-N) to dynamically interact and execute the one or more actions required to complete the industrial task.

13. The method according to any of the preceding claims, wherein the interactions between the one or more resources (108A-N) are dynamic in nature and the interactions comprises modulatory control link between one or more industrial assets (110A-N) and a virtual control link between at least one industrial asset (110A-N) and the operator (112A-N).

14. The method according to any of the preceding claims, wherein dynamically managing the execution of the segmented task between the determined one or more resources (108AN) comprises:
determining whether the execution of the segmented task is completed based on the monitored state of execution; and
repeating the step of monitoring the state of execution of the segmented task until the segmented task is completed.

15. The method according to any of the preceding claims, wherein determining whether the execution of the segmented task is completed based on the monitored state of execution comprises:
terminating the execution of the segmented task between the determined one or more resources (108A-N) if the execution of the segmented task is completed.

16. A computing system (102) for managing execution of an industrial task in a shared control environment (100) comprising:
one or more processor(s) (202); and
a memory (204) coupled to the one or more processor (s) (202), wherein the memory (204) comprises a task management module (116) stored in the form of machine-readable instructions executable by the one or more processor(s) (202), wherein the task management module (116) is capable of performing a method according to any of the claims 1-15.

17. An industrial asset (110A-N) comprises:
one or more processor(s) (602); and
a memory (604) coupled to the one or more processor (s) (602), wherein the memory (604) comprises a task execution management module (126) stored in the form of machine-readable instructions executable by the one or more processor(s) (602), wherein the task execution management module (126) is configured for:
receiving one or more actions to be executed from a computing system (102) via a communication link (104);
executing the one or more actions for completion of an industrial task in collaboration with an operator (112A-N) based on set of parameters; and
reporting state of execution of the one or more actions executed to the computing system (102) using one or more feedback signals.

18. A shared control environment (100) comprising:
a computing system (102) as claimed in claim 16; and
a technical installation (106) communicatively coupled to the computing system (102) via a communication network (104), wherein the technical installation (106) comprises:
one or more resources (108A-N) configured for executing an industrial task, wherein the one or more resources (108A-N) comprises at least one operator (112A-N) and at least one industrial asset (110A-N) as claimed in claim 17.
